# EUROPÄISCHE PATENTSCHRIFT

(11) **EP 2 942 133 B1**
(45) Veröffentlichungstag und Bekanntmachung des Hinweises auf die Patenterteilung: **15.05.2019**
(21) Anmeldenummer: 14001628.8
(22) Anmeldetag: 08.05.2014
(51) Int. Cl.: B23B 5/16, B23K 11/30

(54) **Schweißkappenfräseinrichtung**
Welding tips milling device
Dispositif de fraisage d'électrodes de soudage

(43) Veröffentlichungstag der Anmeldung: 11.11.2015
(73) Patentinhaber: Kyokutoh Europe GmbH, 81373 München (DE)
(72) Erfinder: Schmidt, Ralf Philipp, 67251 Freinsheim (DE)
(74) Vertreter: Patentanwälte Walther Hinz Bayer PartGmbB

(56) Entgegenhaltungen:
- WO-A1-97/44153
- DE-A1- 19 931 889
- DE-U1- 20 106 635
- DE-U1-202004 000 212
- US-A- 5 333 975

## Beschreibung

Die vorliegende Erfindung betrifft eine Schweißkappenfräseinrichtung, umfassend einen Fräskopf mit mindestens einem durch eine Antriebseinrichtung in Rotation versetzbaren Fräsmesser nach dem Oberbegriff des Anspruchs 1.

Schweißzangen zum Punktverschweißen von Blechteilen sind insbesondere aus der Automobilindustrie bekannt. Derartige Schweißzangen umfassen zwei Schweißarme, die endseitig jeweils eine Schweißkappe aufweisen, wobei durch die Schweißzange die beiden Schweißkappen mit Druck auf die zu verschweißenden Bleche gepresst werden.

Die Schweißkappen weisen üblicherweise eine im Wesentlichen ballige oder kegelige Form auf, wobei nach einer bestimmten Anzahl von Schweißvorgängen die Schweißkappen entweder ausgetauscht oder nachbearbeitet werden müssen. Die Nachbearbeitung erfolgt mittels eines sogenannten Kappenfräsers, wobei ein solcher Kappenfräser ein Fräsmesser aufweist, das zumindest eine Schneide besitzt, um die Schweißkappe in Bezug auf ihre Kontur in einen nahezu Neuzustand zu versetzen. Üblicherweise ist es so, dass das Fräsmesser zu beiden Seiten jeweils eine Schneide aufweist, sodass die Schweißkappen beider Zangenarme zugleich bearbeitet werden.

Aus der DE 199 31 889 A1 ist eine Fräseinrichtung mit einer optischen Sensoranordnung bekannt, durch die die Beschaffenheit des Schweißbereichs einer Punkt-Schweiß-Elektrode ermittelt werden soll. Dies vor und auch nach dem Bearbeitungsvorgang der Punkt-Schweiß-Elektrode durch die Fräseinrichtung.

Bei handbetätigten Schweißzangen ist es so, dass der Bediener der Schweißzange nach einer Mehrzahl von Schweißvorgängen die Schweißzange zu einer solchen Kappenfräseinrichtung bringt, die Schweißzange mit ihren Armen mit den endseitig angeordneten Schweißkappen in die Fräskopföffnung des Fräskopfes und somit in den Wirkungsbereich des Fräsmessers bringt, um dann mithilfe eines Fußschalters die Antriebseinrichtung der Schweißkappenfräseinrichtung zu starten. Die Schweißzangen besitzen eine erhebliche Größe und auch ein nicht unerhebliches Gewicht. Vielfach ist es so, dass der Fußschalter sich nicht unmittelbar im Wirkbereich des Fußes des Bedieners befindet, sodass der Bediener sich häufig verrenken muss, wenn er die Schweißzange mit den Zangenarmen in Kontakt mit dem Fräsmesser der Schweißkappenfräseinrichtung halten will und gleichzeitig den Fußtaster betätigen will. Häufig genug verrutscht hierbei die Schweißzange, mit der Folge, dass die Schweißkappe eine ungleichmäßige Kontur erhält. Dies hat zur Folge, dass die Schweißpunkte zum Zusammenfügen der Bleche nicht die erforderliche Festigkeit aufweisen.

Die der Erfindung zugrunde liegende Aufgabe besteht darin, hier Abhilfe zu schaffen. Insbesondere soll gewährleistet sein, dass bei dem Fräsvorgang die Schweißkappe immer die gewünschte Kontur erhält. Darüber hinaus soll die Sicherheit für das Bedienpersonal erhöht werden.

Zur Lösung der Aufgabe wird erfindungsgemäß vorgeschlagen, dass durch den Sensor die Antriebseinrichtung gestartet wird, wenn der als Kupfersensor ausgebildete Sensor eine Schweißkappe mit überwiegendem Kupferanteil detektiert. Hieraus wird deutlich, dass wenn das Ende zumindest eines Zangenarmes mit der daran angeordneten Schweißkappe in den Bereich des Fräsmessers gelangt, automatisch die Antriebseinrichtung gestartet wird, wobei der Antrieb so lange aktiviert ist, bis der Zangenarm mit der daran angeordneten Schweißkappe aus dem Bereich des Sensors gelangt. Der Sensor ist als Kupfersensor ausgebildet. Zumindest die Schweißkappen weisen einen überwiegenden Kupferanteil auf. Hieraus wird deutlich, dass ausschließlich dann, wenn die Schweißkappe aufgrund ihres Kupferanteils den Sensor aktiviert, auch nur dann die Antriebseinrichtung für das mindestens eine Fräsmesser aktiviert wird. Das bedeutet, dass eine Aktivierung der Antriebseinrichtung dann nicht stattfindet, wenn beispielsweise ein Schraubenzieher in den Bereich des Fräsmessers gebracht wird, um beispielsweise Späne zu entfernen. Auch erfolgt keine Aktivierung des Fräsmessers, wenn der Bediener den Finger durch die Fräskopföffnung auf das Fräsmesser zubewegt. Hieraus wird deutlich, dass die Verwendung eines solchen Kupfersensors ganz erheblich der Sicherheit, insbesondere des Bedienpersonals dient. Vorteilhafte Merkmale und Ausgestaltungen der Erfindung ergeben sich aus den Unteransprüchen.

So ist vorgesehen, dass der Fräskopf auf zumindest einer Seite eine Führung für einen Zangenarm einer Schweißzange mit endseitig angeordneter Schweißkappe aufweist. Durch eine solche Führung wird das Einführen des Zangenarmes in die Fräskopföffnung des Fräskopfes zum Fräsmesser hin wesentlich erleichtert.

Die Führung ist hierbei vorteilhaft als auf und/oder unter dem Fräskopf angeordnete Führungsplatte ausgebildet, wobei die Führungsplatte zwei konisch auf das Fräsmesser zulaufende Führungsflächen aufweist. Das heißt, wenn die Schweißzange mit den beiden Zangenarmen auf die Schweißkappenfräseinrichtung zugeführt wird, und in den Bereich der Führungen auf der Ober- und Unterseite des Fräskopfes gelangt, dass dann mit Sicherheit gewährleistet ist, dass die Zangenarme in einer vorgegebenen Position in den Wirkungsbereich des Fräsmessers gelangen.

Als besonders vorteilhaft hat sich herausgestellt, wenn die Führung über dem Fräsmesser in eine kreisförmige Bohrung übergeht, wobei die kreisförmige Bohrung insbesondere im Durchmesser etwas größer ist, als der Außendurchmesser der Schweißkappe, die sich auf dem Ende des jeweiligen Zangenarmes der Schweißzange befindet.

Des Weiteren ist vorteilhaft vorgesehen, dass der Sensor in der Führungsplatte und hier insbesondere im Bereich der kreisförmigen Bohrung oberhalb des Fräsmessers angeordnet ist. Hieraus wird deutlich, dass die Antriebseinrichtung für die Fräsmesser bereits dann aktiviert wird, wenn sich der Zangenarm oberhalb des Fräsmessers befindet, aber noch nicht in Kontakt mit dem Fräsmesser steht, sodass genügend Zeit vorhanden ist, um die Antriebseinrichtung zu aktivieren, bis die Schweißkappen in den Bereich des Fräsmessers gelangen.

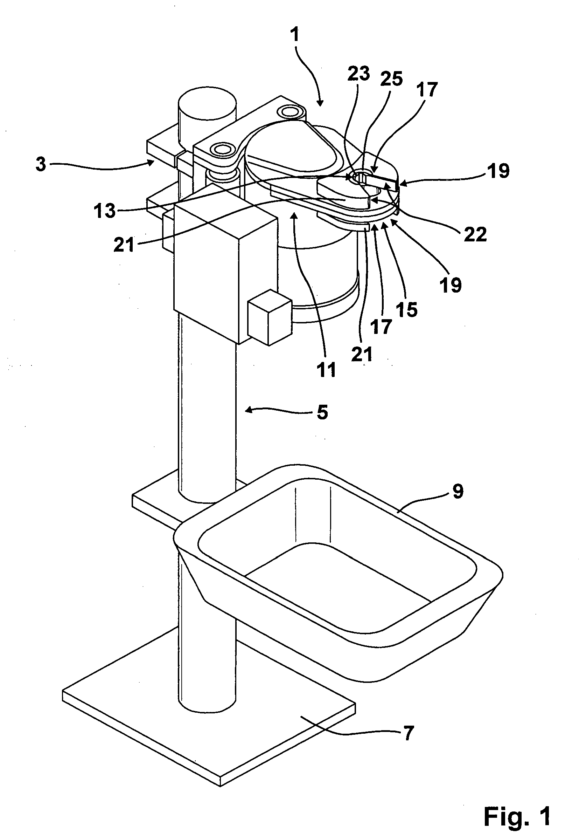

Anhand der Zeichnung wird die Erfindung nachstehend beispielhaft näher erläutert. Die Zeichnung zeigt hierbei eine perspektivische Darstellung der Fräseinrichtung, die an einem Ständer angeordnet ist.

Die insgesamt mit 1 bezeichnete Schweißkappeneinrichtung ist durch einen Halter 3 mit dem Ständer 5 verbunden. Der Ständer 5 weist eine Ständerplatte 7 auf, die mittels Schrauben (nicht dargestellt) auf dem Boden beispielsweise einer Werkhalle verankert werden kann. Unterhalb der Schweißkappenfräseinrichtung 1 befindet sich an dem Ständer 5 der Späneauffangbehälter 9.

Die Schweißkappenfräseinrichtung 1 umfasst die Antriebseinrichtung 11 für das angedeutete Fräsmesser 13 des Fräskopfes 15. Der Fräskopf 15 weist hierbei zu beiden Seiten, im vorliegenden Fall auf der Ober- und auf der Unterseite, eine Fräskopföffnung 17 auf, wobei durch die Fräskopföffnung 17 die Enden der Schweißzangenarme mit den daran angeordneten Schweißkappen in den Wirkungsbereich des Fräsmessers gelangen. Das Fräsmesser 13 weist zur gleichzeitigen Bearbeitung der beiden Schweißkappen der beiden Zangenarme auf jeder Seite eine Schneide auf.

Der Fräskopf 15 besitzt darüber hinaus zu beiden Seiten jeweils eine Führung 19, um das Einführen der Zangenarme in die jeweilige Fräskopföffnung 17 zu erleichtern. Die Führung 19 wird durch eine Führungsplatte 21 gebildet, wobei die Führungsplatte 21 zwei konisch aufeinander zulaufende Führungsflächen 22 umfasst, die in einer kreisförmigen Bohrung 23 unmittelbar oberhalb der Fräskopföffnung 17 auslaufen. Zumindest eine der Führungsplatten 21, die auf der Ober- und auf der Unterseite des Fräskopfes angeordnet sind, weist im Bereich der Fräskopföffnung 17 und hier insbesondere an der kreisförmigen Bohrung 23 den mit 25 bezeichneten Kupfersensor auf. Es ist hierbei ausreichend, wenn beispielsweise nur die obere Führungsplatte 21 an der kreisförmigen Bohrung 23 den entsprechenden Kupfersensor 25 zur Detektion der Kappe auf dem Schweißzangenarm aufweist. Denkbar ist allerdings auch, die auf der Unterseite des Fräskopfes 15 angeordnete Führungsplatte 21 mit einem ebensolchen Sensor 25 im Bereich der kreisförmigen Bohrung 23 zu versehen.

### Bezugszeichenliste:

- 1: Schweißkappenfräseinrichtung
- 3: Halter
- 5: Ständer
- 7: Ständerplatte
- 9: Späneauffangbehälter
- 11: Antriebseinrichtung
- 13: Fräsmesser
- 15: Fräskopf
- 17: Fräskopföffnung
- 19: Führung
- 21: Führungsplatte
- 22: Führungsfläche
- 23: kreisförmige Bohrung
- 25: Kupfersensor

## Patentansprüche

1. Schweißkappenfräseinrichtung (1) umfassend einen Fräskopf (15) mit mindestens einem durch eine Antriebseinrichtung (11) in Rotation versetzbaren Fräsmesser (13),
wobei im Bereich des Fräsmessers (13) mindestens ein Sensor (25) angeordnet ist,
**dadurch gekennzeichnet,**
**dass** durch den Sensor (25) die Antriebseinrichtung (11) gestartet wird, wenn der als Kupfersensor ausgebildete Sensor (25) eine Schweißkappe mit überwiegendem Kupferanteil detektiert.

2. Schweißkappenfräseinrichtung (1) nach Anspruch 1,
**dadurch gekennzeichnet,**
**dass** der Fräskopf (15) auf zumindest einer Seite eine Führung (19) für einen Zangenarm einer Schweißzange mit endseitig angeordneter Schweißkappe aufweist.

3. Schweißkappenfräseinrichtung (1) nach Anspruch 2,
**dadurch gekennzeichnet,**
**dass** die Führung (19) als auf und/oder unter dem Fräskopf (15) angeordnete Führungsplatte (21) ausgebildet ist, wobei die Führungsplatte (21) zwei konisch in Richtung des Fräsmessers (13) zulaufende Führungsflächen (22) aufweist.

4. Schweißkappenfräseinrichtung (1) nach Anspruch 2 oder 3,
**dadurch gekennzeichnet,**
**dass** die Führung (19) über dem Fräsmesser (13) in eine kreisförmige Bohrung (23) übergeht.

5. Schweißkappenfräseinrichtung (1) nach Anspruch 4,
**dadurch gekennzeichnet,**
**dass** der Durchmesser der kreisförmigen Bohrung (23) größer als der Außendurchmesser der zu fräsenden Schweißkappe ist.

6. Schweißkappenfräseinrichtung (1) nach einem der Ansprüche 4 oder 5,
**dadurch gekennzeichnet,**
**dass** der Sensor (25) in der Führungsplatte (21) im Bereich der Bohrung (23) angeordnet ist.

7. Schweißkappenfräseinrichtung (1) nach einem der voranstehenden Ansprüche,
**dadurch gekennzeichnet,**
**dass** das Fräsmesser (13) zu beiden Seiten mindestens eine Schneide aufweist.

## Claims

1. A welding tip milling device (1), comprising a milling head (15) with at least one milling blade (13), which can be set in rotation by a drive mechanism (11),
wherein at least one sensor (25) is located in the area of the milling blade (13),
**characterised in**
**that** the drive mechanism (11) is started by the sensor (25), when the sensor (25) formed as a copper sensor detects a welding tip with predominant copper content.

2. The welding tip milling device (1) according to claim 1,
**characterised in**
**that** the milling head (15) on at least one side comprises a guide (19) for a gripper arm of an welding gun with welding tip located at the end.

3. The welding tip milling device (1) according to claim 2,
**characterised in**
**that** the guide (19) is formed as a guide plate (21) located above and/or below the milling head (15), wherein the guide plate (21) comprises two guide surfaces (22) conically tapering in the direction of the milling blade (13).

4. The welding tip milling device (1) according to claim 2 or 3,
**characterised in**
**that** the guide (19) passes into a circular bore (23) above the milling blade (13).

5. The welding tip milling device (1) according to claim 4,
**characterised in**
**that** the diameter of the circular bore (23) is larger than the outer diameter of the welding tip to be milled.

6. The welding tip milling device (1) according to any one of claims 4 or 5,
**characterised in**
**that** the sensor (25) is located in the guide plate (21) in the area of the bore (23).

7. The welding tip milling device (1) according to any one of the preceding claims,
**characterised in**
**that** the milling blade (13) comprises at least one cutting edge on both sides.

## Revendications

1. Dispositif de fraisage d'électrodes de soudage (1) comportant une tête de fraisage (15) avec au moins une lame de fraisage (13) pouvant être mise en rotation par un dispositif d'entraînement (11), au moins un capteur (25) étant agencé dans la région de la lame de fraisage (13),
**caractérisé en ce**
**que** le dispositif d'entraînement (11) est démarré par le capteur (25) lorsque le capteur (25) formé en tant que capteur en cuivre détecte une électrode de soudage avec une teneur prépondérante en cuivre.

2. Dispositif de fraisage d'électrodes de soudage (1) selon la revendication 1,
**caractérisé en ce**
**que** la tête de fraisage (15) sur au moins un côté comporte un guidage (19) pour un bras de pince d'une pince de soudage avec capuchons de soudage agencée côté extrémité.

3. Dispositif de fraisage d'électrodes de soudage (1) selon la revendication 2,
**caractérisé en ce**
**que** le guidage (19) est formé en tant que plaque de guidage (21) agencée au-dessus et/ou au-dessous de la tête de fraisage (15), la plaque de guidage (21) comportant deux surfaces de guidage (22) qui présentent une configuration conique effilée en direction de la lame de fraisage (13).

4. Dispositif de fraisage d'électrodes de soudage (1) selon la revendication 2 ou 3,
**caractérisé en ce**
**que** le guidage (19) passe en un alésage circulaire (23) au-dessus de la lame de fraisage (13).

5. Dispositif de fraisage d'électrodes de soudage (1) selon la revendication 4,
**caractérisé en ce**
**que** le diamètre de l'alésage circulaire (23) est supérieur au diamètre extérieur de les capuchons de soudage à fraiser.

6. Dispositif de fraisage d'électrodes de soudage (1) selon l'une quelconque des revendications 4 ou 5,
**caractérisé en ce**
**que** le capteur (25) est agencé dans la plaque de guidage (21) dans la région de l'alésage (23).

7. Dispositif de fraisage d'électrodes de soudage (1) selon l'une quelconque des revendications précédentes,
**caractérisé en ce**
**que** la lame de fraisage (13) comporte au moins un tranchant sur les deux côtés.
